(19)

Europäisches
Patentamt
European
Patent Office
Office européen
des brevets

(11) **EP 3 748 401 A1**

(12) **EUROPEAN PATENT APPLICATION**

(43) Date of publication:
**09.12.2020 Bulletin 2020/50**

(51) Int Cl.:
***G01S 19/42*** (2010.01)

(21) Application number: **19177943.8**

(22) Date of filing: **03.06.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ADVA Optical Networking SE
82152 Martinsried / München (DE)**

(72) Inventor: **RONEN, Opher
7400435 Ness Ziona (IL)**

(74) Representative: **Grünecker Patent- und
Rechtsanwälte
PartG mbB
Leopoldstraße 4
80802 München (DE)**

(54) **SYSTEM AND METHOD FOR POSITION DETERMINATION OF A STATIONARY GNSS RECEIVER USING A DISTRIBUTED TIME SIGNAL**

(57)     There is provided a method of determining a location of a stationary Global Navigation Satellite System (GNSS) receiver comprising a terrestrial clock, comprising: receiving from a signal of a satellite, a pseudorange data instance informative of a location of the satellite and usable for calculation of a pseudorange between the GNSS receiver and the satellite; obtaining data indicative of a time of receiving the pseudorange data instance, wherein the time of receiving is provided with the help of the terrestrial clock that is characterized by one or more clock bias parameters that are substantially constant relative to a clock utilized by the satellite; repeating the receiving and obtaining at least three times; and using, at least, the at least four pseudorange data instances and the respective time of receiving to calculate at least one of: location of the GNSS receiver, or the one or more clock bias parameters.

Fig. 1

**Description**

**TECHNICAL FIELD**

The presently disclosed subject matter relates to Global Navigation Satellite Systems (GNSS) and, more particularly, to determining the position of a stationary GNSS receiver.

**BACKGROUND**

There are various types of Global Navigation Satellite Systems (GNSS) available, including the Global Positioning System (GPS), Global Navigation Satellite System (GLONASS), and others.

Problems of position determination using satellites have been recognized in the conventional art and various techniques have been developed to provide solutions. To perform position determination, some prior art GNSS receiver systems receive - simultaneously - signals from at least four satellites, and utilize position determination procedures such as trilateration and pseudorange estimation to determine their position. GNSS satellites typically require highly accurate timing systems and often include highly accurate clocks (e.g. atomic clocks).

**GENERAL DESCRIPTION**

According to certain aspects of the presently disclosed subject matter there is provided a method for determining a location of a stationary Global Navigation Satellite System (GNSS) receiver comprising a terrestrial clock. The method comprises: a) receiving, by a processing circuitry (PC), from a signal of a satellite, a first data informative of a location of the satellite and usable for calculation of a pseudorange between the GNSS receiver and the satellite, thereby giving rise to a pseudorange data instance; b) obtaining, by the PC, a second data indicative of a time of receiving the pseudorange data instance, and associating the second data with the pseudorange data instance, wherein the time of receiving is provided with the help of the terrestrial clock that is characterized by one or more clock bias parameters that are substantially constant relative to a clock utilized by the GNSS system; c) repeating operations a) - b) at least three next times, thereby giving rise to at least four pseudorange data instances, wherein each pseudorange data instance is associated with respective data indicative of the time of receiving of the respective pseudorange data instance, and wherein each pseudorange data instance is informative of a respective next location of a satellite; and d) using, at least, the at least four pseudorange data instances and the respectively associated data indicative of the time of receiving to calculate at least one of: data informative of the location of the GNSS receiver, or data informative of the one or more clock bias parameters.

Optionally, the method can comprise one or more of features (i) to (vii) listed below, in any desired combination or permutation which is technically feasible:

(i) one or more clock bias parameters characterizing the terrestrial clock comprise a clock phase offset.
(ii) the operations a) -b) are repeated at least four next times, thereby giving rise to at least five pseudorange data instances, and wherein the one or more clock bias parameters characterizing the terrestrial clock comprise a clock frequency offset.
(iii) the operations a) -b) are repeated at least four next times, thereby giving rise to at least five pseudorange data instances, wherein the pseudorange data instances are used to calculate data informative of the location of the GNSS receiver in an overdetermined calculation.
(iv) the terrestrial clock is a recovered clock.
(v) the terrestrial clock is recovered in accordance with precision time protocol (PTP).
(vi) the terrestrial clock is recovered in accordance with synchronous Ethernet.
(vii) each pseudorange data instance of the at least four pseudorange data instances is received from the same satellite.

According to another aspects of the presently disclosed subject matter there is provided a Global Navigation Satellite System (GNSS) receiver comprising a terrestrial clock and configured to determine position thereof in accordance with the method disclosed above.

According to another aspect of the presently disclosed subject matter there is provided a non-transitory program storage device readable by a computer, tangibly embodying computer readable instructions executable by the computer to perform a method of determining a position of a stationary Global Navigation Satellite System (GNSS) receiver comprising a terrestrial clock in accordance with the method disclosed above.

Among the advantages of certain embodiments of the presently disclosed subject matter are: enabling deployment of simplified GNSS receiver devices with no need of concurrent reception of multiple satellite signals, and enabling correction of network-distributed timing signals and, thereby, increasing accuracy of position determination.

## BRIEF DESCRIPTION OF THE DRAWINGS

In order to understand the invention and to see how it can be carried out in practice, embodiments will be described, by way of non-limiting examples, with reference to the accompanying drawings, in which:

**Fig. 1** illustrates an exemplified stationary GNSS positioning system receiving a signal from a single satellite at different times, according to some embodiments of the presently disclosed subject matter;

**Fig. 2** illustrates a block diagram of an example GNSS positioning system with example subsystems and interfaces to other system components, according to some embodiments of the presently disclosed subject matter;

**Fig. 3** illustrates a generalized flow diagram of an example method for determining the position of a stationary GNSS receiver device - according to some embodiments of the presently disclosed subject matter; and

**Fig. 4** illustrates a generalized flow diagram of an example method for obtaining a pseudorange data instance from a satellite - according to some embodiments of the presently disclosed subject matter.

## DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "computing", "representing", "obtaining", "performing", recovering", "constructing", "comparing", "generating", "matching", "updating", "calculating", "estimating", "correlating" or the like, refer to the action(s) and/or process(es) of a computer that manipulate and/or transform data into other data, said data represented as physical, such as electronic, quantities and/or said data representing the physical objects. The term "computer" should be expansively construed to cover any kind of hardware-based electronic device with data processing capabilities including, by way of non-limiting example, the "processing circuitry", and "processor" disclosed in the present application.

The terms "non-transitory memory" and "non-transitory storage medium" used herein should be expansively construed to cover any volatile or non-volatile computer memory suitable to the presently disclosed subject matter.

The operations in accordance with the teachings herein may be performed by a computer specially constructed for the desired purposes or by a general-purpose computer specially configured for the desired purpose by a computer program stored in a non-transitory computer-readable storage medium.

Embodiments of the presently disclosed subject matter are not described with reference to any particular programming language. It will be appreciated that a variety of programming languages may be used to implement the teachings of the presently disclosed subject matter as described herein.

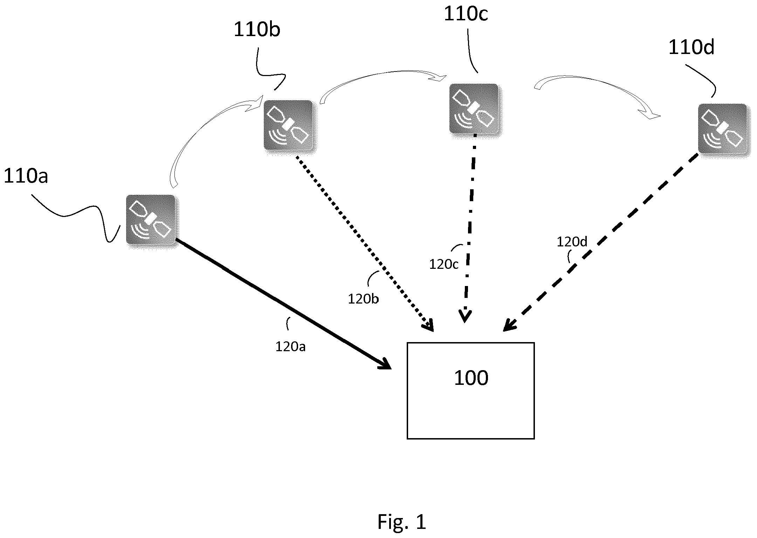

Bearing this in mind, attention is drawn to **Fig. 1,** which illustrates an example stationary GNSS positioning system **100** (also referred to herein as a GNSS receiver) receiving a satellite signal (**120a, 120b, 120c, 120d**) of a single satellite located at different positions **(110a, 110b, 110c, 120d)** (relative to the GNSS receiver) at different times, according to some embodiments of the presently disclosed subject matter.

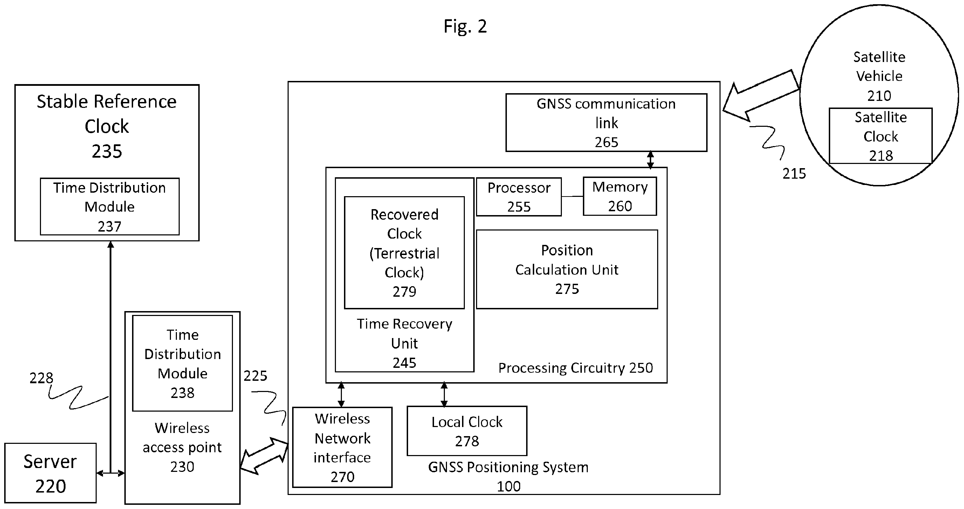

In some embodiments of the presently disclosed subject matter, GNSS positioning system **100** can include a terrestrial clock such as - for example - a recovered clock based on a timing signal distributed from a stable reference clock (such as an atomic clock). Such a terrestrial clock can utilize, for example, a time distribution protocol such as precision time protocol (PTP) or synchronous Ethernet (SyncE) - as will be described hereinbelow with reference to **Fig. 2.**

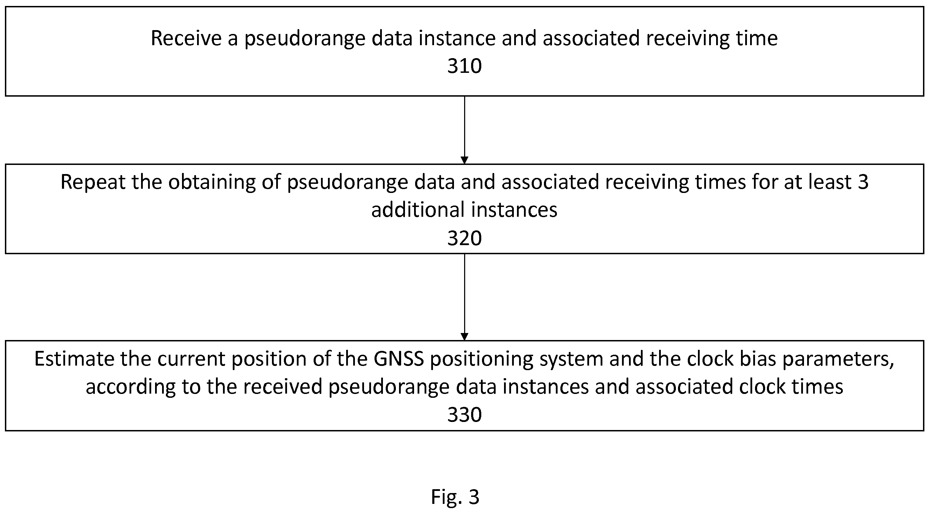

In some embodiments of the presently disclosed subject matter, the clock bias of terrestrial clock **130** (relative to clock times utilized by the satellite transmitting the signal **120a, 120b, 120c, 120d**) conforms to a particular clock bias model (as described hereinbelow). GNSS positioning system **100** can then, for example, compute its position - as well as estimates of the parameters of the clock bias model - on the basis of successive acquisitions of pseudorange data from the satellite signal **120a, 120b, 120c, 120d** (as will be described hereinbelow with reference to **Figs. 3-4**).

By way of contrast, a prior art GNSS positioning system can use simultaneous signals from four (or more) different satellites. In some embodiments, prior art GNSS positioning systems use an inexpensive low-quality local clock, and process data from the four signals received to determine receiver position coordinates and a time correction value.

In some embodiments of the presently disclosed subject matter, use of a single satellite for position determination can enable deployment of simplified receiver devices which, for example, have no need for simultaneously receiving multiple satellite signals.

In some embodiments, prior art GNSS positioning systems continue to receive satellite signals when stationary, and update their calculated position using simple methods such as averaging. In some embodiments of the presently disclosed subject matter, calculating position using successive satellite signals can yield more accurate position determination - as compared to such prior art methods which simply perform averaging of coordinates determined over time.

In some embodiments of the presently disclosed subject matter, clock bias parameters calculated by the method can be utilized to improve the accuracy of a network-distributed timing signal. By way of non-limiting example: a device which receives such a timing signal (via - for example - PTP or SyncE) can successively acquire pseudorange data from the satellite signal, and then calculate the bias of the distributed time as compared to the GNSS time utilized by the satellite (for example: GPS time). The device can then correct the distributed time accordingly.

It is noted that the teachings of the presently disclosed subject matter are not bound by the GNSS positioning system and satellite described with reference to **Fig. 1.** Equivalent and/or modified functionality can be consolidated or divided in another manner and can be implemented in any appropriate combination of software with firmware and/or hardware and executed on a suitable device. The GNSS positioning system can be a standalone entity, or integrated, fully or partly, with other entities - via a network or other means.

Attention is now directed to **Fig. 2,** which illustrates a block diagram of an example GNSS positioning system (**100**) with example subsystems and interfaces to other system components - according to some embodiments of the presently disclosed subject matter.

Satellite vehicle (SV) **210** can be a GNSS satellite of a suitable type such as, for example, Global Position System (GPS), Global Navigation Satellite System (GLONASS), Galileo, etc.

Satellite vehicle **210** can include satellite clock **218.** Satellite clock **218** can utilize, for example, a highly stable timing source, such as, for example, one or more rubidium clocks. Satellite clock **218** can track, for example, an internationally maintained time, such as GPS time as maintained by the US Naval Observatory.

Satellite vehicle **210** can periodically transmit one or more satellite signals **215** (such as, for example, an "LI C/A" band used in GPS, and, for example, L2C and/or L5 bands as complementing signals) to the earth. Satellite signal **215** can carry periodic transmissions of data such as: GPS week number, SV accuracy and health, clock correction terms, ephemeris parameters, almanac and health data, special messages, satellite configuration flags, ionospheric and UTC data, almanac reference time and week number, etc. These data transmissions can include, for example, data informative of the current satellite location in orbit. Satellite vehicle **210** can utilize satellite clock **218** in preparing the data for transmission. Accordingly, the data transmissions can include data derivative of the time indicated by satellite clock **218.**

GNSS positioning system **100** can be, for example, a processor-based device that can utilize a terrestrial clock (such as, for example, a highly accurate time recovered via precision time protocol (PTP)) together with a series of data obtained from a received GNSS signal to estimate, for example, the physical position of the device, as well as parameters that describe the clock bias of the terrestrial clock relative to satellite clock **218.**

By way of non-limiting example: GNSS positioning system **100** can be located within an internet-of-things (IOT) sensor device that accompanies goods which are stored in a particular location for a period of hours or days until being transported to a different location. In this manner, while the goods are being stored, GNSS positioning system **100** can receive satellite signal **215** from satellite vehicle **210** and determine its own physical location.

Stable reference clock **235** can be, for example, a terrestrial-based (i.e. non-orbiting) clock utilizing, for example, a highly precise timing source. For example: stable reference clock **235** can include a cesium clock.

In some embodiments of the presently disclosed subject matter, GNSS positioning system **100** is stationary for the duration of the position determination operation. As used herein, "stationary" means that the variation of location of GNSS positioning system **100** during the position determination operation is such that impact on the estimated location is small enough to be of limited significance for the particular application utilizing the method. For example: in the case of a remote tracking application, the impact of motion of a GNSS receiver by a few centimeters during the position determination operation on the final position determination result might be non-significant.

In some embodiments of the presently disclosed subject matter, stable reference clock **235** can be, for example, a free-running clock which is initialized to an internationally maintained time such as GPS time, and then allowed to run. In some embodiments of the presently disclosed subject matter, stable reference clock **235** can be, for example, a clock (such as a national laboratory clock) which is continually synchronized to an internationally maintained time such as, for example, GPS time.

Stable reference clock **235** can be operably connected to communications network **228.** Communication network **228** can be, by way of non-limiting example: a wired network such as Ethernet, or a wireless network such as a microwave link etc.

Stable reference clock **235** can include time distribution module **237.** Time distribution module **237** can implement a network-based time distribution protocol such as - by way of non-limiting example - PTP or SyncE. Time distribution module **237** can thus distribute the time maintained by stable reference clock **235** to devices attached to communications network **228**.

Wireless access point **230** can be operably connected to communication network **228**. Wireless access point **230** can further be operably connected to wireless network **225**. Wireless access point **230** and wireless network **225** can conform to, for example, a wireless communications standard such as Institute of Electrical and Electronics Engineers (IEEE) 802.11.

Wireless access point **230** can distribute time data generated by time distribution module **237** to devices attached to its wireless network **225**. In some embodiments, wireless access point **230** can include a time distribution module **238** to facilitate time distribution. Time distribution module **238** can implement, for example, PTP boundary clock functionality.

GNSS positioning system **100** can include GNSS communication link **265,** which can receive, for example, satellite signal **215** from, for example, satellite vehicle **210**. In some embodiments of the presently disclosed subject matter, GNSS communication link **265** includes a single receiver which is capable of receiving signals on a single channel. In some embodiments of the presently disclosed subject matter, GNSS communication link **265** includes multiple receivers and is capable of receiving signals on multiple channels.

GNSS positioning system **100** can include a processing circuitry **250** which in turn can include, for example, a processor **255** operably coupled to a memory **260**. Processor **255** can be a hardware-based electronic device with data processing capabilities, such as, for example, a general purpose processor, a specialized Application Specific Integrated Circuit (ASIC), one or more cores in a multicore processor etc. A processor **255** can also consist, for example, of multiple processors, multiple ASICs, virtual processors, combinations thereof etc.

A memory **260** can be, for example, any kind of volatile or non-volatile storage, and can include, for example, a single physical memory component or a plurality of physical memory components. The memory **260** can be configured to store various data used in computation.

As will be further detailed hereinbelow with reference to **Figs. 3-4,** the processing circuitry **250** can be configured to execute several functional modules in accordance with computer-readable instructions implemented on a non-transitory computer-readable storage medium. Such functional modules are referred to hereinafter as comprised in the processing and memory circuitry. These modules can include, for example, time recovery unit **245,** and position calculation unit **275**.

Position calculation unit **275** can calculate the position of the GNSS positioning system, as described hereinbelow with reference to **Figs. 3-4**. In some embodiments, position calculation unit **275** calculates the position where the GNSS positioning system receives the satellite signal (e.g. the antenna component of the GNSS communication link). Position calculation unit **275** can also transmit calculated position coordinates or other information to, for example, a monitoring device (not shown) located on, for example, communication network **228** (via - for example - wireless network interface **270** and wireless network **225**).

In some embodiments, time recovery unit **245** performs clock recovery according to a timing distribution protocol (e.g. PTP, SyncE) utilized by time distribution modules (**237, 238**). In some embodiments, the clock recovery process results in recovered clock (terrestrial clock) **279,** which can be a clock time readable by other modules such as position calculation unit **275**. It is noted that the term "terrestrial clock" as used herein can refer to, for example: a) a clock located within the GNSS positioning system **100** or b) a recovered clock obtained from a time or frequency distribution protocol.

In some embodiments, time recovery unit **245** can utilize timing data from local clock **278** in conjunction with received messages of a time distribution protocol - in order to generate recovered clock **279**. Time recovery unit **245** can do this by utilizing methods known in the art.

GNSS positioning system **100** can include wireless network interface **270**. Wireless network interface **270** can be operably connected to the processing circuitry **250** and to wireless network **225,** and can, for example, send and receive data on wireless network **225**.

GNSS Positioning system **100** can include local clock **278**. Local clock **278** can be, for example, a hardware clock based on a quartz oscillator. Local clock **278** can be operably connected to processing circuitry **250**. Processing circuitry **250** (for example: position calculation unit **275**) can, for example, read the time from local clock **278**.

In some embodiments of the presently disclosed subject matter, the bias of recovered clock **279** relative to satellite clock **218** (which can be, for example, tracking an externally maintained time) can be characterized by the relationship:

$$\text{Eq. 1} \quad t_l = a \cdot t_s + b$$

where $t_l$ denotes the time currently indicated by recovered clock 279, $t_s$ denotes the current time at satellite clock **218** (which is, for example, unknown to GNSS positioning system **100**), $a$ is a frequency-dependent clock bias (hereforward termed a "frequency offset") and b is a fixed clock bias (hereforward termed a "phase offset"). Assuming, for example, that stable reference clock **235** maintains time with a sufficiently high stability, and that its time is distributed to GNSS positioning system **100** with a suitable distribution mechanism, a and b can be substantially constant for the duration of the position determination procedure.

As used herein, "substantially constant" means that the variation of the clock bias parameter(s) during the position determination operation is such that any impact on the estimated location is small enough to be of limited significance for the particular application utilizing the method. For example: in the case of a remote tracking application, it might be the case that the position determination error resulting from a variation in phase offset of 1 nanosecond over the duration of a position determination operation, is considered non-significant.

In some embodiments of the presently disclosed subject matter - such as, for example, embodiments wherein stable reference clock **235** and the distribution of the clock are of sufficiently high quality - the frequency offset can be equal to 1 for the duration of the position determination procedure. In this case, the bias of the recovered clock **279** relative to satellite clock **218** can be characterized by the relationship:

$$\mathbf{Eq.2} \quad t_l = t_s + b$$

It is noted that in some embodiments of the presently disclosed subject matter, the network connection and wireless access point are not present. In such embodiments, stable reference clock **235** can be located in the GNSS positioning system **100** (instead of local clock **278**). In such embodiments, time distribution modules **237 238** and time recovery unit **245** (and thus recovered clock **279**) can be absent. In such embodiments, Eq.1 and Eq.2 can be employed to describe the relationship between stable reference clock **235** and satellite clock **218.**

Server **220** can be operably connected to communication network **228**. In some embodiments of the presently disclosed subject matter, GNSS positioning system **100** can offload some of its processing to server **220** to, for example, conserve power or to speed calculation.

It is noted that the teachings of the presently disclosed subject matter are not bound by the GNSS positioning system and associated components described with reference to **Fig. 2.** Equivalent and/or modified functionality can be consolidated or divided in another manner and can be implemented in any appropriate combination of software with firmware and/or hardware and executed on a suitable device.

Attention is now directed to **Fig. 3,** which illustrates a generalized flow diagram of an example method for determining the position of a stationary GNSS receiver device - according to some embodiments of the presently disclosed subject matter.

The method illustrated in **Fig. 3** can be utilized, by way of non-limiting example, by a GNSS positioning system that remains substantially stationary during position determination - such as, for example, a receiver that is mobile or portable, but remains in the same location or substantially the same location for the duration of the position determination procedure.

The method illustrated in **Fig. 3** can be utilized, by way of non-limiting example, by a GNSS positioning system including a terrestrial clock whose bias from a satellite clock can be characterized by one or more clock bias parameters that remain substantially constant for the duration of the position determination procedure. These clock bias parameters can include, for example: a phase offset and a frequency offset-as explained hereinabove with reference to **Fig. 2.**

The method illustrated in **Fig. 3** can be utilized, by way of non-limiting example, in a system (such as the system illustrated in **Fig. 2**) wherein a stable reference clock distributes time over a network - via a protocol such as PTP or a mechanism such as SyncE. In such systems, timing variations introduced by the network distribution of the time can - in some embodiments - be small enough so as not to impact the accuracy of the position/clock bias parameter determination to an extent that exceeds an application-specific accuracy threshold. The method illustrated in **Fig. 3** can also be utilized, by way of non-limiting example, in a system that has a stable reference clock located within the GNSS receiver device.

The term "pseudorange" can refer to an estimated distance ("range") between a GNSS receiver and a GNSS satellite. As there are inaccuracies in the computation of this distance, the term pseudo-range is used, rather than range.

It is noted that various methods for calculation of pseudorange are known in the art. It is further noted that satellite-transmitted parameters and satellite signal properties necessary for particular methods for calculation of pseudorange are known in the art. Such data can include transmitted satellite parameters listed hereinabove with reference to **Fig. 2,** or satellite signal properties measured from or related to the satellite signal itself (such as - for example -code phase, replica carrier Doppler phase, replica carrier Doppler frequency etc.).

Pseudorange data refers hereinbelow to different data that GNSS positioning system **100** (for example: position calculation unit **275**) can utilize to estimate a pseudorange value. Pseudorange data can include, for example, various data decoded from or associated with satellite signal **215.** Pseudorange data can include, for example, data that is informative of the location of a satellite. A particular set of received pseudorange data is hereinbelow termed a pseudorange data instance.

To begin a procedure to determine its physical position, GNSS positioning system **100** (for example: position calculation unit **275**) can receive (**310**) a pseudorange data instance - together with associated data indicative of a terrestrial clock time representing the time of receiving the pseudorange data.

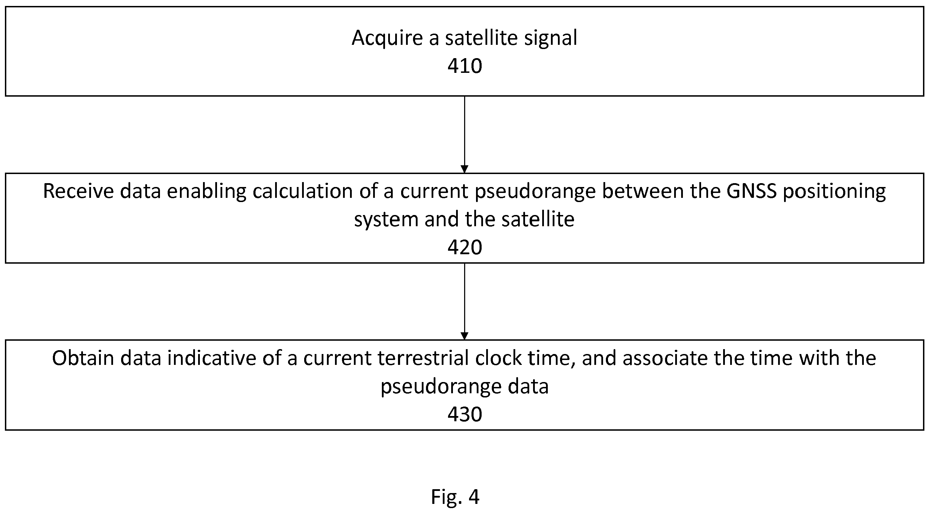

Details of example methods for receiving a pseudorange data instance and associated receiving time are described below, with reference to **Fig. 4.**

GNSS positioning system **100** (for example: position calculation unit **275**) can next repeat the obtaining of pseudorange data and associated clock times for at least 3 next (i.e. additional) pseudorange data instances.

In some embodiments of the presently disclosed subject matter, the GNSS positioning system **100** (for example: position calculation unit **275**) utilizes a terrestrial clock (such as - for example - recovered clock **279**) which is characterized by a clock bias model which includes a phase offset and a frequency offset (as described hereinabove with reference to **Fig. 2**). In this case, the minimum number of pseudorange data instances required can be 5 - as the GNSS positioning system **100** (for example: position calculation unit **275**) is required to solve for 5 unknowns (i.e. 3 coordinates, phase offset, and frequency offset).

In some embodiments of the presently disclosed subject matter, the GNSS positioning system **100** (for example: position calculation unit **275**) utilizes a terrestrial clock (such as recovered clock **279**) which is characterized by a clock bias model including a phase offset and no frequency offset (as described hereinabove with reference to **Fig. 2**). In this case, the minimum number of pseudorange data instances required can be 4 - as the GNSS positioning system **100** (for example: position calculation unit **275**) is required to solve for 4 unknowns (i.e. 3 coordinates and phase offset).

In some embodiments of the presently disclosed subject matter, each pseudorange data instance is informative of a different location of a satellite. In some embodiments, GNSS positioning system **100** (for example: position calculation unit **275**) can, for example, wait for a period of time between pseudorange data acquisitions - the duration of the wait period can then depend on periodic data transmission cycles of satellite vehicle **210**. In some embodiments, GNSS positioning system **100** (for example: position calculation unit **275**) can wait - for example - 10 minutes between pseudorange data receptions.

GNSS Positioning system **100** (for example: Position Calculation Unit **275**) can next utilize the received pseudorange data instances and the receiving time associated with each instance to estimate (**330**), for example, a current GNSS receiver position and one or more clock bias parameters.

There are various methods that the GNSS Positioning system **100** (for example: Position Calculation Unit **275**) can use to estimate current position and clock bias parameters. By way of non-limiting example, GNSS Positioning system **100** (for example: Position Calculation Unit **275**) can first compute a pseudorange value from each pseudorange data instance according to methods known in the art. GNSS Positioning system **100** (for example: Position Calculation Unit **275**) can then construct - for each of the four or more pseudorange data instances and associated clock times - an equation such as:

$$\underline{\text{Eq. 3}} \quad \rho_i = \sqrt{\left(x_i - x_p\right)^2 + \left(y_i - y_p\right)^2 + \left(z_i - z_p\right)^2} + c \cdot (at_i + b)$$

where $x_i$, $y_i$, and $z_i$ denote the satellite's position in three dimensions as indicated in pseudorange data (for example: as transmitted in satellite signal **215**), $t_i$ denotes the associated clock time, and $\{x_p, y_p, z_p\}$ denotes the as-of-yet undetermined current position coordinates. The constant c denotes the speed-of-light.

GNSS Positioning system **100** (for example: Position Calculation Unit **275**) can solve the resulting system of equations using a method of equation-solving known in the art - resulting in an estimate of current position $\{x_p, y_p, z_p\}$ as well as estimates for frequency offset a and phase offset b.

It is noted that in embodiments where a is known to be 1, an equation such as:

$$\underline{\text{Eq. 4}} \quad \rho_i = \sqrt{\left(x_i - x_p\right)^2 + \left(y_i - y_p\right)^2 + \left(z_i - z_p\right)^2} + c \cdot (t_i + b)$$

can be utilized.

It is noted that in some embodiments of the presently disclosed subject matter, the, GNSS positioning system **100** (for example: position calculation unit **275**) can calculate location coordinates without explicitly calculating clock bias parameter values, or compute clock bias parameter values without explicitly calculating location coordinates.

It is noted that GNSS Positioning system **100** (for example: Position Calculation Unit **275**) can calculate $\{x_p, y_p, z_p\}$ and b (and possibly also a) based on a number of pseudorange data instances (and thus a number of equations) larger than the minimum. In this case, the calculation is overdetermined, which can result in more accurate estimates.

It is noted that the instances of pseudorange data received by GNSS Positioning system **100** (for example: Position Calculation Unit **275**) can originate at a satellite signal **215** of a single satellite vehicle **210.** Alternatively, the received instances of pseudorange data can originate at different satellite signals **215** transmitted from different satellite vehicles **210.**

It is noted that the technique explained hereinabove with relation to equations 3-4 represents an example method for calculating position coordinates and clock bias parameter values, and that other methods of calculation are possible. By way of non-limiting example, it may possible to improve accuracy of the estimation with equations which take into account additional factors such as for example variations in satellite signal propagation time in a non-vacuum, as is known in the art. It is noted that it can be possible to compute coordinates and clock bias parameters directly from the pseudorange data (i.e. without actually calculating pseudoranges).

In some embodiments of the presently disclosed subject matter, GNSS Positioning system **100** (for example: Position Calculation Unit **275**) can transmit the instances of pseudorange data and associated local clock times to server **220,** and server **220** can perform the calculation.

Attention is now directed to **Fig. 4,** which illustrates a generalized flow diagram of an example method for receiving an instance of pseudorange data from a satellite and associating a clock time - according to some embodiments of the presently disclosed subject matter.

GNSS positioning system **100** (for example: GNSS communication link **265**) can begin by acquiring (**410**) a satellite signal **215.** Acquiring the satellite signal can include various steps as known in the art, for example: tracking, demodulating etc. In some embodiments, GNSS positioning system **100** (for example: GNSS communication link **265**) can acquire the satellite signal **215** in advance of receiving each pseudorange data instance. In some embodiments, GNSS positioning system **100** (for example: GNSS communication link **265**) can acquire the satellite signal **215** and maintain the acquired satellite signal **215** for a duration which includes receiving more than one pseudorange data instance.

GNSS positioning system **100** (for example: position calculation unit **275**) can next receive (**420**) - from the satellite signal - transmitted data which enables calculation of a current pseudorange between GNSS positioning system **100** and satellite vehicle **210.** Details of pseudorange calculation methods are described above, with reference to **Fig. 3.** The pseudorange data can include data informative of the current satellite coordinates (i.e. location of satellite vehicle **210** in orbit). In some embodiments this data is contained in an ephemeris parameters field transmitted by satellite vehicle **210.**

GNSS Positioning system **100** (for example: Position Calculation Unit **275**) can next obtain (**430**) data indicative of a time of receiving this pseudorange data instance, and associate this time with the received pseudorange data instance.

By way of non-limiting example: GNSS Positioning system **100** (for example: Position Calculation Unit **275**) can determine a time (or data indicative of a time) from its terrestrial clock (e.g. recovered clock **279**) in processor cycles subsequent (for example: immediately subsequent) to the receiving of the pseudorange data.

Alternatively: GNSS Positioning system **100** (for example: Position Calculation Unit **275**) can determine a time from its terrestrial clock (e.g. recovered clock **279**) in processor cycles not immediately subsequent (or even prior to) to the receiving of the pseudorange data, but such that any inaccuracy introduced by the delay or by variations in the delay affect the accuracy of the final position determination process in a manner that does not exceed an application-specific threshold. For example: if the application utilizing the position requires that the determined position be accurate within 20 meters, the delay or variations in delay should be such that they do not cause any inaccuracy in position determination to exceed 20 meters.

In some embodiments of the presently disclosed subject matter, the terrestrial clock can be a stable reference clock such as an atomic clock (e.g. a cesium clock) located inside GNSS positioning system **100.** In this case, GNSS Positioning system **100** (for example: Position Calculation Unit **275**) can determine data indicative of a current terrestrial clock time directly from the stable reference clock.

It is noted that the teachings of the presently disclosed subject matter are not bound by the flow diagram illustrated in **Fig. 4,** and that the illustrated operations can occur out of the illustrated order. For example, operations **420** and **430** shown in succession can be executed substantially simultaneously, or in the reverse order. It is also noted that whilst the flow chart is described with reference to elements of the system of **Fig. 1** and **Fig. 2,** this is by no means binding, and the operations can be performed by elements other than those described herein.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

**Claims**

1. A method of determining a location of a stationary Global Navigation Satellite System (GNSS) receiver comprising a terrestrial clock, the method comprising:

    a) receiving, by a processing circuitry (PC), from a signal of a satellite, a first data informative of a location of the satellite and usable for calculation of a pseudorange between the GNSS receiver and the satellite, thereby giving rise to a pseudorange data instance;
    b) obtaining, by the PC, a second data indicative of a time of receiving the pseudorange data instance, and associating the second data with the pseudorange data instance, wherein the time of receiving is provided with the help of the terrestrial clock that is **characterized by** one or more clock bias parameters that are substantially constant relative to a clock utilized by the satellite;
    c) repeating operations a) - b) at least three next times, thereby giving rise to at least four pseudorange data instances, wherein each pseudorange data instance is associated with respective data indicative of the time of receiving of the respective pseudorange data instance, and wherein each pseudorange data instance is informative of a respective next location of a satellite; and
    d) using, at least, the at least four pseudorange data instances and the respectively associated data indicative of the time of receiving to calculate at least one of:

        data informative of the location of the GNSS receiver, or
        data informative of the one or more clock bias parameters.

2. The method of claim 1, wherein the one or more clock bias parameters characterizing the terrestrial clock comprise a clock phase offset.

3. The method of claim 2, wherein the operations a) -b) are repeated at least four next times, thereby giving rise to at least five pseudorange data instances, and wherein the one or more clock bias parameters characterizing the terrestrial clock comprise a clock frequency offset.

4. The method of claim 1, wherein the operations a) -b) are repeated at least four next times, thereby giving rise to at least five pseudorange data instances, wherein the pseudorange data instances are used to calculate data informative of the location of the GNSS receiver in an overdetermined calculation.

5. The method of any one of claims 1-4, wherein the terrestrial clock is a recovered clock.

6. The method of claim 5, wherein the terrestrial clock is recovered in accordance with precision time protocol (PTP).

7. The method of claim 5, wherein the terrestrial clock is recovered in accordance with synchronous Ethernet.

8. The method of any one of claims 1-7, wherein each pseudorange data instance of the at least four pseudorange data instances is received from the same satellite.

9. A Global Navigation Satellite System (GNSS) receiver comprising a terrestrial clock and configured to determine position thereof in accordance with any one of Claims 1-8.

10. A non-transitory computer readable medium comprising instructions that, when executed by a computer, cause the computer to perform a method of determining a position of a stationary Global Navigation Satellite System (GNSS) receiver comprising a terrestrial clock in accordance with any one of Claims 1 - 8.

Fig. 1

Fig. 2

Stable Reference
Clock
235

Time Distribution
Module
237

Server
220

Time
Distribution
Module
238

Wireless
access point
230

228

225

GNSS communication
link
265

Satellite
Vehicle
210

Satellite
Clock
218

215

Processing Circuitry 250

Processor
255

Memory
260

Recovered
Clock
(Terrestrial
Clock)
279

Position
Calculation Unit
275

Time Recovery
Unit
245

Wireless
Network
interface
270

Local Clock
278

GNSS Positioning System
100

EP 3 748 401 A1

```
┌─────────────────────────────────────────────────────────────────────┐
│          Receive a pseudorange data instance and associated          │
│                          receiving time                              │
│                              310                                     │
└─────────────────────────────────────────────────────────────────────┘
                                  │
                                  ▼
┌─────────────────────────────────────────────────────────────────────┐
│   Repeat the obtaining of pseudorange data and associated receiving  │
│                  times for at least 3 additional instances           │
│                              320                                     │
└─────────────────────────────────────────────────────────────────────┘
                                  │
                                  ▼
┌─────────────────────────────────────────────────────────────────────┐
│  Estimate the current position of the GNSS positioning system and    │
│  the clock bias parameters, according to the received pseudorange    │
│         data instances and associated clock times                    │
│                              330                                     │
└─────────────────────────────────────────────────────────────────────┘
```

Fig. 3

| Acquire a satellite signal |
| :--: |
| 410 |

| Receive data enabling calculation of a current pseudorange between the GNSS positioning system and the satellite |
| :--: |
| 420 |

| Obtain data indicative of a current terrestrial clock time, and associate the time with the pseudorange data |
| :--: |
| 430 |

Fig. 4

Europäisches
Patentamt

European
Patent Office

Office européen
des brevets

## EUROPEAN SEARCH REPORT

Application Number

EP 19 17 7943

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/030841 A1 (LEE RICHARD M [US] ET AL) 8 February 2007 (2007-02-08) * paragraphs [0017], [0124] - [0127], [0142], [0182], [0183], [0187], [0189], [0202] *<br>----- | 1-10 | INV.<br>G01S19/42 |
| A | US 2015/181385 A1 (ZAMPETTI GEORGE P [US] ET AL) 25 June 2015 (2015-06-25) * paragraphs [0060] - [0062] *<br>----- | 6 | |

TECHNICAL FIELDS
SEARCHED       (IPC)

G01S

The present search report has been drawn up for all claims

| Place of search | Date of completion of the search | Examiner |
|---|---|---|
| Munich | 22 November 2019 | Chindamo, Gregorio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 19 17 7943

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2019

| Patent document cited in search report | | | Publication date | Patent family member(s) | | | Publication date |
|---|---|---|---|---|---|---|---|
| US 2007030841 | A1 | | 08-02-2007 | EP | 1889188 | A2 | 20-02-2008 |
| | | | | JP | 5356021 | B2 | 04-12-2013 |
| | | | | JP | 2008545122 | A | 11-12-2008 |
| | | | | JP | 2013217925 | A | 24-10-2013 |
| | | | | US | 2007030841 | A1 | 08-02-2007 |
| | | | | US | 2011206039 | A1 | 25-08-2011 |
| | | | | US | 2013135147 | A1 | 30-05-2013 |
| | | | | US | 2015009986 | A1 | 08-01-2015 |
| | | | | US | 2016381218 | A1 | 29-12-2016 |
| | | | | WO | 2006124685 | A2 | 23-11-2006 |
| US 2015181385 | A1 | | 25-06-2015 | US | 2015181385 | A1 | 25-06-2015 |
| | | | | US | 2017230927 | A1 | 10-08-2017 |

EPO FORM P0459

For more details about this annex : see Official Journal of the European Patent Office, No. 12/82